# EUROPEAN PATENT APPLICATION

(11) **EP 2 605 203 A1**
(43) Date of publication of application: **19.06.2013**
(21) Application number: 11193588.8
(22) Date of filing: 14.12.2011
(51) Int. Cl.: G06Q 20/22, G06Q 20/40

(54) **System and method for controlling access to an electronic account**

(71) Applicant: Research In Motion Limited, Waterloo, ON N2L 3W8 (CA)
(72) Inventor: May, Darrell Reginald, Waterloo Ontario N2L 3W8 (CA); Vander Veen, Raymond Paul, Waterloo Ontario N2V 2M6 (CA); Ewanchuk, Andrew John, Waterloo Ontario N2L 3W8 (CA)
(74) Representative: Moore, Barry

(57) **Abstract**

The present disclosure described herein relates to a system and method for managing transaction restrictions for an account in a family of accounts through a network. The method comprises: upon receipt of a transaction request from a device in the network at a server, analyzing a restriction field associated with the account against parameters associated the transaction request. When a transaction price associated with the transaction request exceeds a value in the restriction field or when a transaction entity associated with the transaction request is present as a restricted entity in the restriction field, completion of the transaction is denied. When contents of the restriction field relating to restrictions do not match any of the parameters, completion of the transaction is allowed. The method also updates the restriction field to reflect a change request for the transaction restriction for a subsequent transaction upon receipt of the change request.

## Description

### FIELD OF DISCLOSURE

The disclosure described herein relates to a system and method for controlling access to an electronic account, such as a "charge" account.

### BACKGROUND

Currently, transactions for various goods and services can be initiated and completed over a network. The transaction generally involves accessing an order processing system and completing a transaction request and providing delivery and payment information. Payment information is typically provided as account information. A typical account has one user associated with it. Some account systems provide for linking of multiple accounts to one account. However, the linkings are limited in scope and flexibility.

### BRIEF DESCRIPTION OF THE DRAWINGS

Embodiments of the present disclosure will now be described, by way of example only, with reference to the accompanying drawings, in which:

Fig. 1 is a schematic diagram of a communication network, where a device is in communication with a server that manages a plurality of accounts according to an embodiment;

Fig. 2 is a schematic representation of the server of Fig. 1;

Fig. 3 is a flowchart of exemplary processes executed by the server of Fig. 1, as it evaluates a transaction request associated with an account of the plurality of accounts;

Fig. 4 is a relationship chart of a set of accounts of the plurality of accounts managed by the server of Fig. 1;

Fig. 5 is a relationship chart of a set of accounts of the plurality of accounts managed by the server of Fig. 4; and

Fig. 6 is a schematic representation of the device of Fig. 1.

### DETAILED DESCRIPTION OF AN EMBODIMENT

The description which follows and the embodiments described therein are provided by way of illustration of an example or examples of particular embodiments of the principles of the present disclosure. These examples are provided for the purposes of explanation and not limitation of those principles and of the present disclosure. In the description which follows, like parts are marked throughout the specification and the drawings with the same respective reference numerals.

Generally, an embodiment provides a device, system and method to manage, evaluate and process transactions requests. In particular, in electronic transaction systems, a typical transaction is a purchase, lease, download and / or licensing of an item, such as a digital file (for music, a movie a printed article, etc.), a computer program or application (e.g. through an online application, or "apps", store), an access code to a website or computer link, an article, a good, a service and other chattel and rights. For the sake of convenience, the term "article" is used herein as a proxy for any item identified above, unless otherwise noted. Processing of the transaction includes completion of the identification of the article, completion of a purchaser's contact and delivery information and processing of payment through a device that is accessing the related transaction processing system. The device is typically a computer connected to a network. The processing system is typically a computer-based server also connected to the network. The transaction is typically controlled through a series of graphical user interfaces (GUIs) that are generated by the server (or its proxy) that the device can access. The purchaser uses the device to enter data through its keyboard, view the GUIs and items through its display and make selections for the transaction through the GUIs.

Frequently, payment is processed as a later process in the transaction. For electronic transactions, exchange of hard currency is not provided. Instead, payment is submitted through a charge of an appropriate dollar amount. The charge is typically submitted through an account. Exemplary accounts include a charge card account (e.g., Visa, American Express, MasterCard accounts, all trade-marks), a vendor's charge card account (e.g. an IKEA Card, trade-mark), a vendor's "pre-loaded" card (e.g. a Starbuck's card, trade-mark), a bank account, a third party payment system account (e.g. PayPal, trade-mark) and others. Accounts can also be provided for transactions that do not necessarily involve cash (at least at the outset). Such accounts include a vendor's network account (e.g. a PlayStation Network account, trade-mark), an affinity system account (e.g. an Air-Miles account, trade-mark), a gaming account where virtual and actual funds are processed (e.g. a Second Life account, trade-mark) and other types of accounts. In processing an account payment, details about the account are submitted during the transaction. This can include providing the account number, a security code and other information. This account information is typically separate from any "user" account information that the purchaser entered to the server when he (or she) initiated the transaction.

Typically, an account has one user associated with it. Another type of account is a joint account where two or more users are associated with it, where the users each have equal, full access and processing authorities for transactions on the joint account. An embodiment provides facilities, processes and frameworks for associating additional user(s) to a primary account (including accounts noted above), where the additional users are provided with different (i.e. more or less) powers, authorizations, limits and / or privileges in processing transaction requests associated with the account. The additional users are provided with associated accounts that are associated with the primary account. The powers, authorizations, limits and /or privileges of the associated accounts can be set, reset and / or modified by a user accessing the primary account (or his proxy) through enrolment and maintenance processes. An exemplary environment where associated accounts can be managed is in a family context. For a family, one or both parents have control of a vendor's charge card account and children in the family are provided with associated accounts to the charge card account. Each child may have a separate associate account, with different privileges and limits to his siblings. Categories and filters can be provided to the associated accounts to assist in managing same. Limits and credits can be dynamically adjusted. Funds associated with an account (or an associated account) can be dynamically made available to other accounts upon certain conditions. Evaluating and processing of events relating to a transaction are conducted by one or more servers, described below. In another exemplary application, an embodiment can be deployed for an organization (such as a company). For an exemplary company, an embodiment can manage funds and / or credits that are allocated and managed to persons/entities/departments in a hierarchy associated with the company's structure. Such funds/credits can be allocated to certain levels in the hierarchy and at those levels; designated persons/entities can manage distribution of those funds/credits among subordinate persons/entities at those levels. For example, in a corporate organization consider a corporate organization having a chief executive officer (CEO) with a set of vice presidents (VPs) reporting to her. Each VP has a set of directors reporting to that VP. The CEO may designate that each of the VPs are allocated $10K per month to cover miscellaneous expenditures for their respective groups. The VPs can then regulate/make credit rules for their directors and relating carriages. An embodiment also enables global / "regional" policies to be established and applied to the appropriate level(s) in the hierarchy. For example, the CEO may establish a corporation-wide policy that no person can allocate a miscellaneous expenditure on restaurant purchases. A regional policy applies to a defined section in the organization, which can be any portion from none to all of the organization. The policy may apply to one or more specific branches, locations and / or levels in the organization. For example, regionally, a VP may establish a policy for his group that no person can allocate a miscellaneous expenditure on restaurant purchases from Vendor X.

In a first aspect, a method for managing transaction restrictions for an account in a family of accounts through a network is provided. The method comprises: upon receipt of a transaction request from a device in the network at a server, analyzing a restriction field associated with the account against parameters associated the transaction request. When a transaction price associated with the transaction request exceeds a value in the restriction field, the method denies completion of the transaction. When a transaction entity associated with the transaction request is present as a restricted entity in the restriction field, the method denies completion of the transaction. When contents of the restriction field relating to restrictions do not match any of the parameters, the method allows completion of the transaction. The method also updates the restriction field to reflect a change request from the network for the transaction restriction for a subsequent transaction upon receipt of the change request.

The method may further comprise allowing completion of the transaction when the transaction entity associated with the transaction request is present as an allowed entity in the restriction field.

The method may further comprise generating and sending a deny message to the device through the network when completion of the transaction is denied.

The method may further comprise generating and sending an allow message to the device through the network when completion of the transaction is allowed.

The method may further comprise updating a transaction status field associated with the account with a parameter of the parameters associated with the transaction when completion of the transaction is allowed.

The method may further comprise analyzing the transaction status field against parameters associated a subsequent transaction request from the network to determine whether the subsequent transaction can be completed upon receipt of the subsequent transaction request.

The method may further comprise revising the transaction field with a parameter related to a restriction update request for a group of accounts from a supervisor account associated with the group of accounts when the server receives the restriction update request and when the account is in the group of accounts.

The method may further comprise updating the restriction field with a revised value upon detection of an update condition for the restriction field.

In the method, the update condition may be based on a time event or an occurrence event, the time event and the occurrence event being tracked in a database accessed by the server.

In the method, data for the occurrence event may be updated by a supervisor account associated with the account.

The method may further comprise upon receipt of the transaction request: analyzing a second restriction field associated with the account against parameters associated the transaction request; arbitrating between values in the restriction field and the second restriction field when there is a conflict to determine a dominant restriction value; analyzing the dominant restriction value against the transaction request; when the transaction price exceeds a value in the dominant restriction value, denying completion of the transaction; and when the transaction entity associated with the transaction request is present as the restricted entity in the dominant restriction value, denying completion of the transaction.

The method may further comprise transferring a value from a credit field in the account to a corresponding credit field in a second account.

In the method, the value may be transferred upon either receiving a transfer credit request from the second account or acceptance of an offer for the value from the second account.

In a second aspect, a server for managing transaction restrictions for an account in a family of accounts through a network is provided. The server comprises a transaction processing module and an account management module. The transaction processing module is adapted to: receive a transaction request from a device associated with the account in the network; analyze a restriction field associated with the account against parameters associated the transaction request; deny completion of the transaction when a transaction price associated with the transaction request exceeds a value in the restriction field or a transaction entity associated with the transaction request is present as a restricted entity in the restriction field; and allow completion of the transaction when contents of the restriction field relating to restrictions do not match any of the parameters. The account management module is adapted to receive a change request from the network for the transaction restriction; and update the restriction field to reflect the change request.

In the server, the transaction processing module may further allow completion of the transaction when the transaction entity associated with the transaction request is present as an allowed entity in the restriction field.

In the server, the transaction processing module may further: generate and send a deny message to the device through the network when completion of the transaction is denied; and generate and send an allow message to the device through the network when completion of the transaction is allowed.

In the server, the transaction processing module may further update a transaction status field associated with the account with a parameter of the parameters associated with the transaction when completion of the transaction is allowed.

In the server, the transaction processing module may further analyze the transaction status field against parameters associated the subsequent transaction request to determine whether a subsequent transaction can be completed upon receipt of the subsequent transaction request from the network.

In other aspects, various combinations of sets and subsets of the above aspects are provided.

Now, a description is provided of a network and a device can access an exemplary account through a server in the network according to an embodiment. The account can be associated with one or more associated accounts that can be accessed through other devices in the network. Thereafter, specific features of embodiments are discussed.

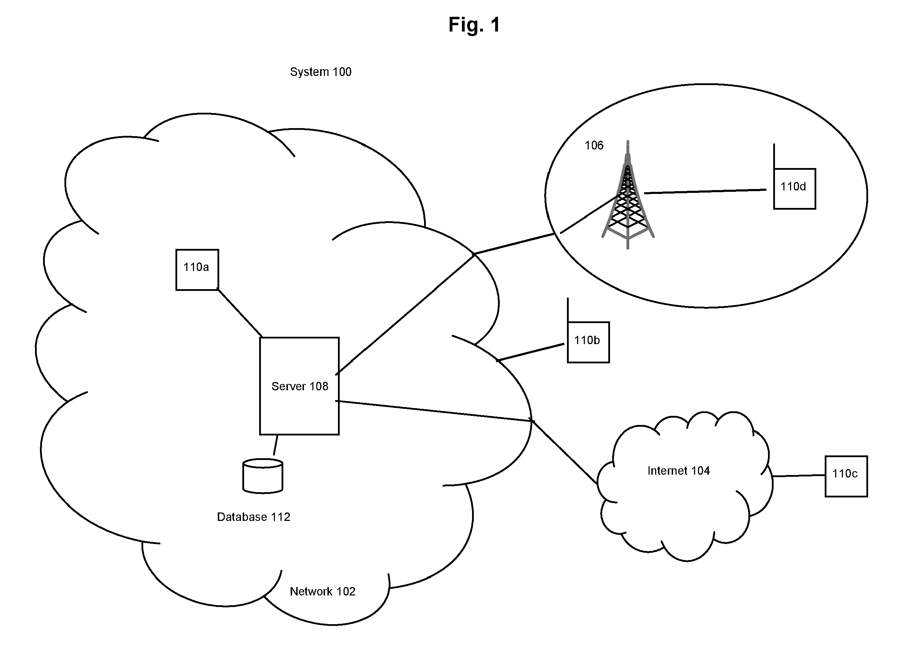

Referring to Fig. 1, system 100 shows network 102 in communication with Internet 104 and wireless network 106. Server 108 in network 102 controls and maintains a plurality of accounts that are accessed through connections to network 102. Electronic devices 110 are provided in system 100 and generally are based on a computing platform having functionality of an enhanced personal digital assistant with cellphone and e-mail features. It is, however, to be understood that electronic device 110 can be based on construction design and functionality of other electronic devices, such as tablet computing devices (or simply tablets), smart telephones, desktop computers, laptop computers, personal digital assistants (PDAs), cameras, gaming devices, video cameras, pagers or laptops having telephony equipment. Device 110 may include a movement detection module, which may incorporate an accelerometer. In addition to detecting motion, an accelerometer may be used to determine speed and acceleration of device 102. Device 110 may also have a global positioning system (GPS) module that receives signals from one or more satellites, thereby allowing a location of the device to be calculated using triangulation techniques. Notably, location and speed data for device 110 may be determined based on the received location signals, such as those from a GPS module, using methods and applications known in the art. Device 110 may have radio frequency identification (RFID) capabilities, and thus device 110 may include an RFID transponder and / or an RFID reader. RFID uses radio waves to automatically identify objects, which may be done in several ways.

Device 110 may further include a short-range communication sub-system that enables communication between device 110 and other proximate systems or devices, which need not necessarily be similar devices. For example, the short-range communication sub-system may include an infrared device and associated circuits and components, or a Bluetooth (trade-mark) communication module to provide for communication with similarly enabled systems.

Exemplary devices 110a, 110b, 110c and 110d are shown. Each device 110a-d is in communication with one or more of network 102, Internet 104 and / or wireless network 106. Device 110a is an exemplary computer in network 102 communicating with server 108. Device 110b is an exemplary device outside network 102, communicating with network 102 and ultimately with server 108. Device 110c is an exemplary device outside network 102, communicating with Internet 104 to communicate with network 102 and ultimately with server 108. Device 110d is an exemplary wireless device in network 106, communicating through network 106 to network 102 and ultimately with server 108.

Network 106 is an exemplary wireless communication network. Through network 106, device 110d is operable to conduct wireless telephone calls. Exemplary technologies for network 106 are any known wireless phone systems such as a Mobitex (trade-mark) network, a DataTAC (trade-mark) network, a General Packet Radio Service (GPRS) network and also a variety of voice communication networks, such as Advanced Mobile Phone Service (AMPS), Time Division Multiple Access (TDMA), Code Division Multiple Access (CDMA) system, wireless CDMA, CDMA 2000 system, Cellular Digital Packet Data (CDPD) system, Personal Communication Service (PCS), Global System for Mobile Communication (GSM), Wi-Fi networks, 3GPP Long Term Evolution (LTE) networks, etc. Other wireless phone systems that network 106 may support can include Wireless WAN (IMS), Wireless MAN (Wi-Max or IEEE 802.16), Wireless LAN (IEEE 802.11), Wireless PAN (IEEE 802.15 and Bluetooth), high-speed data packet access (HSDPA) networks, Evolved High Speed Packet Access (HSPA+) networks, etc. and any others that support voice. Additionally, network 106 may be a Bluetooth network. Device 110d has capabilities of communicating with other devices using various communication technologies, including instant messaging (IM) systems, text messaging (TM) systems and short message service (SMS) systems. Network 102 and Internet 104 may support one or more of the technologies described for network 106.

In network 102, server 108 is a data and transaction processing computing device that communicates with connected devices 110 (e.g. devices 110a-110d) to effect, process and manage electronic transactions for articles as noted above. The functions and operations of server 108 described herein may be distributed among two or more servers, for example in a server farm. For the sake of convenience, embodiments are described relating to server 108, which is described as a single unit. However, it will be understood that equivalent functionality of server 108 can be implemented in two or more devices in communication with each other. Database 112 is a data repository for server 108. Database 112 may itself be a computing device with dedicated large secondary storage devices (e.g. hard drives, tape backup).

With components of an exemplary network identified, further detail is provided on notable features of embodiments.

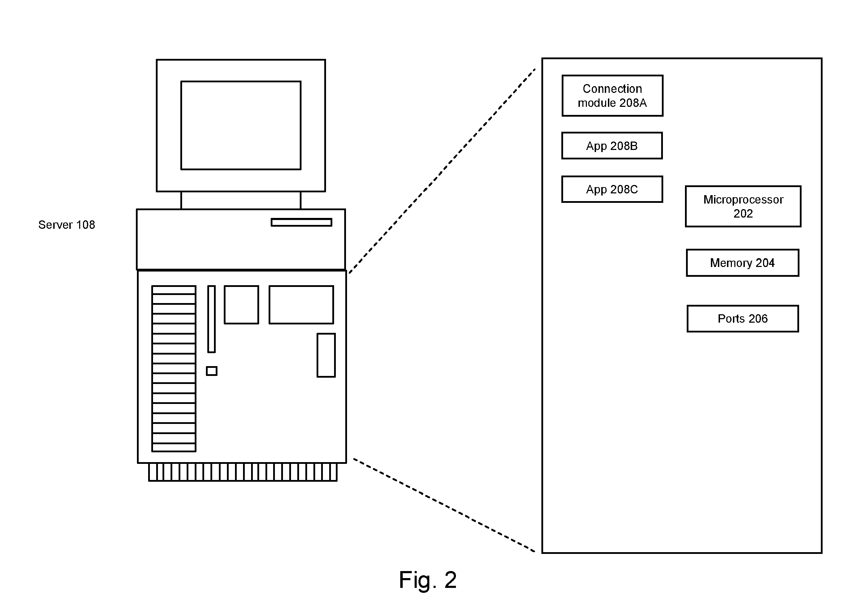

Referring to Fig. 2, further detail is provided on features of server 108. General features of server 108 for processing electronic communications in accordance with an embodiment are shown. In an embodiment, server 108 is based on a general purpose computing platform. It may have the form factor of a desktop or laptop computer. It may be a minicomputer. In a present embodiment, server 108 includes main processing station 200. Internally, server 108 has microprocessor 202 and memory 204. Connection ports 206 provide a communication connection system to allow server 108 to connect to with network 102, providing access to device 110 and other devices.

Applications 208 are software that execute on microprocessor 202 and may be stored in memory 204. Applications 208 control basic operations of server 108, including ports 206. Connection module 208A provides the connection-level communication between server 108 and other elements in network 102, to ultimately allow access to processing of transactions and data processing for transactions by server 108. Account management module 208B receives requests for account management requests from devices 110 and processes them. Transaction processing module 208C processes transaction requests received from devices 110 and provides approval, rejection, status reports and / or requests for additional information.

With structural features of an embodiment provided, further detail is now provided on processing transactions by an embodiment. The transaction is initiated by an electronic device (e.g. any of device 110a-110d) that communicates with a transaction server (e.g. server 108). Server 108 receives the transaction request from the electronic device and processes it using its processes operating thereon and data, e.g. from database 114.

For the sake of illustration, an exemplary transaction is described as initiated by device 110a to server 108 (Fig. 1). Device 110a accesses a transaction portal maintained by server 108. The portal may direct device 110a to a website or dedicated application. Through the portal, device 110a is presented with a series of input screens, where data relating to the transaction can be entered. The data can include account data, address data, passwords, articles relating to the transaction, quantity, prices, delivery requirements and other information that is typically associated with a transaction. The input screens may be one or more graphical user interfaces (GUIs). Once the transaction request is completed at device 110a, by completing information in the input screens, data from the input screens is extracted therefrom and sent to server 108 in a transaction request message.

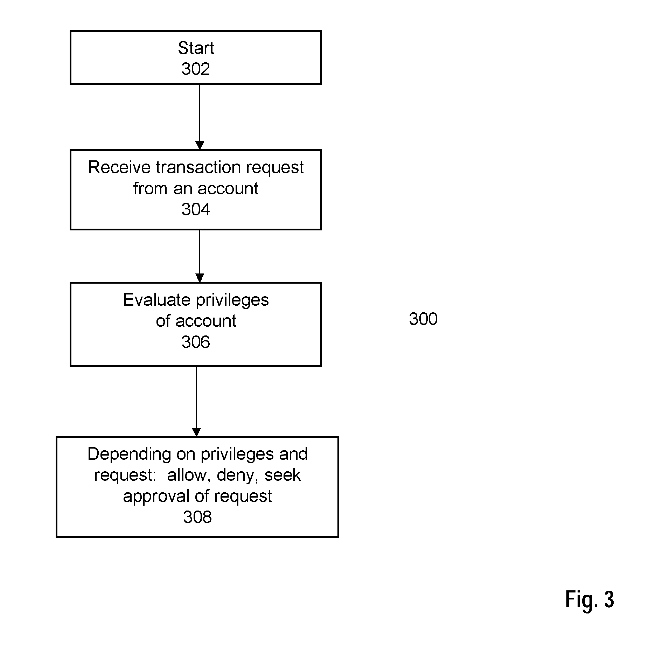

Fig. 3 shows exemplary processes 300 executed by server 108 once the transaction request is sent to server 108 from device 110a. Transaction processing module 208C (Fig. 2) may process some or all of the related processes on sever 108.

At block 302, server 108 starts a waiting process, where server 108 periodically monitors for transaction requests from network 102. At block 304, server 108 receives a transaction request from device 110a, which can include data relating to a transaction noted above. At block 306, server 108 analyzes the data to identify an account associated with the transaction request and examines any privileges, restrictions, conditions and / or limits associated with the account. For example, the account associated with the transaction may be a primary account (as described above), which has no restrictions for transactions imposed thereon. Alternatively, the account may be an associated account (as described above), which has some restrictions, conditions and / or limitations for transactions imposed thereon, which may have been set by the primary account. A transaction (and its related transaction request) can have several parameters associated with them, including any one or more of: a transaction price, a description of the item associated with the transaction, a transaction entity (i.e. the source supplying the item), a quantity for the item, a delivery date, taxing details, delivery details and others. At block 308, server 108 analyzes transaction restrictions associated with the account with the transaction request and determines what privileges, restrictions, conditions and / or limitations, if any, are to be imposed on the transaction. Server 108 then allows, modifies, seeks additional information, conditionally allows, denies and / or conditionally denies the transaction request based on an analysis of the account's restrictions against the transaction. When the transaction is allowed, an allow message may be generated and sent to device 110a. When the transaction is denied, a deny message may be generated and sent to device 110a.
A transaction restriction can be updated through a request provided to server 108. In one embodiment a supervisor account can generate and send a restriction update request for an account or a group of accounts to update/change the value of the restriction. If the update is implemented, subsequent transactions can be analyzed against the updated value restriction field.

Server 108 may access database 112 in order to retrieve account data to analyze the transaction request, which may be stored in database 112.

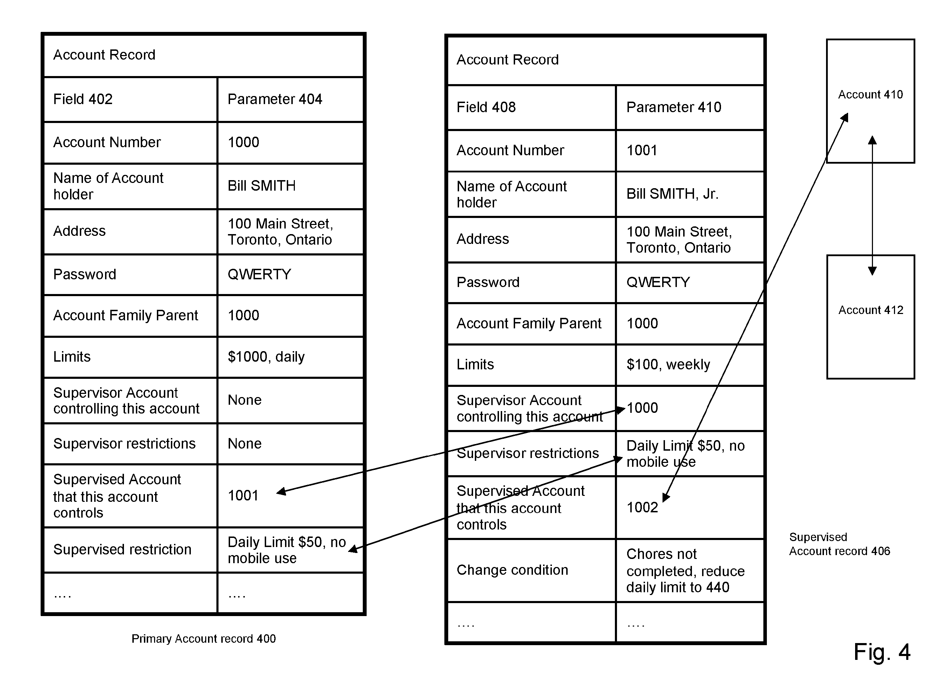

Fig. 4 shows an exemplary record 400 for an account managed by an embodiment, showing fields 402 and corresponding values 404 for such fields. Some exemplary fields include Account Number, Name of Account Holder, Address, Password and Limits. Additional fields and / or fewer fields may be provided for an account. For an embodiment, an account can be associated with other accounts. As such, additional fields are provided to allow links to be established between accounts. These additional fields include: Supervisor Account, Supervisor Restrictions, Supervised Account, Supervised Restrictions and Transaction Status. Values for these fields are provided in fields 404. The data in the record may be stored in database 112 and may be periodically updated. Additional or less fields may be provided for an account.

Fig. 4 also shows an exemplary record 406 for an associated account, showing administrative fields 408 and values 410. As with fields 402, typical fields include Account Number, Name of Account Holder, Address, Password, Limits, Supervisor Account, Supervisor Restrictions, Supervised Account and Supervised Restrictions. The data in the record may be stored in database 112 and may be periodically updated.

An embodiment utilizes the records 400 and 406 to establish and maintain associations between accounts and to manage privileges, limits, conditions and restrictions imposed by one account onto another. As an exemplary naming convention, a first account that can impose a transaction restriction on a second account is considered to be a "supervisor" account to the second account. The second account is considered to be a "supervised" account controlled by the first account. An account can have supervisor rights to one or more supervised accounts (i.e., the account can supervise several accounts). The supervisor rights may differ among the supervised accounts. Also, an account that is being supervised can be supervised by one or more supervisor accounts (i.e., the second account can have several supervisors). The rights being supervised may differ among the supervisor accounts.

Account management module 208B (Fig. 2) of server 108 may implement processes to receive requests for account management requests from devices 110 and process such requests. The term "transaction restriction", or simply "restriction", is used herein to refer to any privilege (positive, negative, inclusory or exclusory), parameter, value, limit, condition and / or restriction that is associated with an account. The restriction may be self-imposed (i.e. imposed by a user associated with the account) and / or may be imposed by another account associated with the account. The other account is typically, but not necessarily, a supervisor account to the account. Exclusory restrictions may not permit a transaction from being completed that: exceeds a price threshold; is in a list of restricted vendors (e.g. McDonalds), and / or is in a list of restricted products. Inclusory restrictions may only allow transactions to be completed from a list of qualified vendors (e.g. Wal-Mart) or for a list of qualified products.

For the given example in Fig. 4, record 400 is a primary (supervisor) account and record 406 is a supervised account associated with the primary account. For the sake of example, consider a situation where the primary account is managed by an adult and the supervised account is provided to a child of the adult. Record 400 represents a data record for the parent's account. The embodiment has assigned account number "1000" for the primary account. Record 406 represents a data record for the child's account, identified as a supervised account to the primary account. The embodiment assigned account number "1001" for the associated account. A link is made from the primary account to the associated account through the Supervised Account field in record 400, which has account "1001" provided therein, thereby linking account 1000 to account 1001. Account management module 208B may generate unique account numbers for an account and its associated accounts. The Account Family Parent field contains the account number for the ultimate root account for this family of accounts. Here, account 1000 is the family parent account. A corresponding Account Family Parent field is provided in record 406. As such, there is an identified "head" for all accounts in the family of accounts. The "head" can be provided with ultimate supervision authorities to manage, change and update fields, limits, data and relationships of the members of the family of accounts. Authority can be provided to a proxy account.

The Restrictions field contains data on parameters, privileges, restrictions, limitations and / or conditions for transaction requests that are initiated by the account. In record 406, account 1001 has been set with a daily limit of $50, with no transactions permitted through mobile devices. The Restriction field can be also be associated with a "Policy" (i.e., qualitative) restriction. For example, the Restriction field value may be based on a vendor, a product and /or a product rating. For example, restrictions can be defined where no video games can be purchased from any vendor, where video games having an age / content requirements are restricted from purchase (e.g. video games with designated Entertainment Software Rating Board (ESRB) ratings may be either excluded from purchase) or where a video game purchase must have a designated rating. The values for the restrictions are either preset and / or can be changed by an account holder having modification rights or can be changed by server 108 in view of an automated change process (described later).

As part of a restriction, one or more time / recurrence qualifiers may be provided. For example, a credit or restriction may be set or reset to a certain value upon an event and / or a repeating event. For example, in a personal family account, a father may establish a recurring credit rule for an account associated with his son to replenish a credit value on a periodic basis. For example, the son may be provided with a credit limit of $40 per month that recurs until some time horizon, e.g. December 31. Other recurrences may be established. For example, the account may be replenished with $20 every second month.

Non-date based recurrences may be provided. For example, the account may be replenished with the $20 only when the monthly chores are completed. Tracking non-date events for recurrences may be provided through messages that are sent by a supervisor to the system that indicates satisfaction of the non-date event. The embodiment may establish a message monitor that will replenish the affected account upon receipt of a predetermined message from an appropriate supervisor for the affected account. Alternatively or additionally, a database, such as database 112 (Fig. 1) may track status fields for various accounts. The database may be updated with changes to the Restriction that may cause a replenishment /change trigger for a Restriction field value for an account. Updates to the status fields may be provided by processes that evaluate conditions relating to the network, the hierarchy and the various accounts and revise affected status fields accordingly. Also, specific status fields can be updated from requests from accounts having proper authorization through messages sent to a status field processing module for an embodiment.

An account that has privileges to change the above noted parameters for the noted account is generally a supervisor account; other accounts may be afforded such privileges (e.g. an account that is immediately "superior" to a controlled account in the organization hierarchy). Records 400 and 406 can be expanded to have multiple transaction limits for various types of transactions. For example a separate daily limit can be imposed for record 406 on a Visa charge transaction. As seen in record 406, it also has a second Restriction field where a $100 weekly limit is set for transactions.

Generally, when there are two or more populated restriction fields, all associated restrictions in the restriction fields must be cleared in order for the transaction to be approved. However, some embodiments may identify one or more dominant restriction field(s) from all of the restriction fields. The dominant restriction field may be identified by arbitrating between values in the restriction fields. That dominant restriction value can be used as a sole restriction value for evaluation against a transaction. Dominance may be determined from the hierarchy of the account imposing the restriction, the relative size of the restrictions and whether one restriction has a largely deviating value from a group of other restrictions. Other factors to determine dominance may be used, which may be related to a source of the restriction requests, the size of the restriction requests and others.

As a data mirror, a link is made from the associated account to the primary account through the Supervisor Account field in record 406, which has account "1000" provided therein, thereby linking account 1001 to account 1000. In one embodiment, the Supervised Account field in record 400 will provide a link to a record for the account identified in that field, here record 406. However, there may not be complete correspondence between such fields. In one embodiment, if any restriction is applied to an account, either through a Supervised Account field in another account record or a Supervisor Account field for its record, then that restriction will be maintained. In another embodiment, a relationship correspondence must exist between a Supervised Account field in another account record and the Supervisor Account field for its record, for restriction to be maintained. An account can be provided with multiple supervised and / or supervisor accounts, where multiple fields for such associations can be provided. It will be appreciated that account record 406 may itself have supervisor rights over another account, such as account 410, which itself may have supervisor rights over yet another account, such as account 412.

Records 400 and 406 have a Transaction Status Flag field. This field provides a status indicator of whether or not the account can complete a current transaction. For example, if a prior transaction had exceeded any of the limits applicable on the account, then the field can be set with a "Deny" value. As such, the field can be initially checked to first, without having to evaluate specific transaction limits for the account against the current transaction. The field can have other values such as "Allow", or "Allow, subject to review of limits" and an amount value that indicates how much of a limit is still available. The value can be a cumulative value of transactions associated with the account. Date values can be associated with the field. Server 108 can update the value of this field as transactions are processed for the related account. The value of the field may be reset to a default level (e.g., "Allow, subject to review of limits") periodically by server 108. A process can be executed by server 108 to scan all records for its managed accounts and update the value of the field (and other fields) accordingly. Updating the transaction status field involves tracking and updating a cumulative value of transactions associated with the account and with the transaction. It also can involve determining a residual transaction limit from the cumulative value against. Once a transaction is completed, an embodiment can update the transaction status field with the cumulative value of transactions to provide a residual transaction value limit for the field.

An embodiment also provides processes to build the family of accounts, allowing creation of a new family and changes/additions to an existing family. A GUI is provided that is managed by server 108 to allow a user at a device 110 to create a new family and add records to an existing family. When a new record is added, server 108 generates a GUI that provides a template, which may be similar in appearance and / or content to record 400 and prompts a user at device 110 to complete the relevant fields of the template. Once all fields are completed, the record can be saved by server 108, which then creates a formal record for the account and stores it in database 114. Consistency checks and validations can be conducted by server 108 prior to saving the record. If any inconsistencies are identified, a GUI can be generated prompting the user to correct and / or confirm questionable data entries.

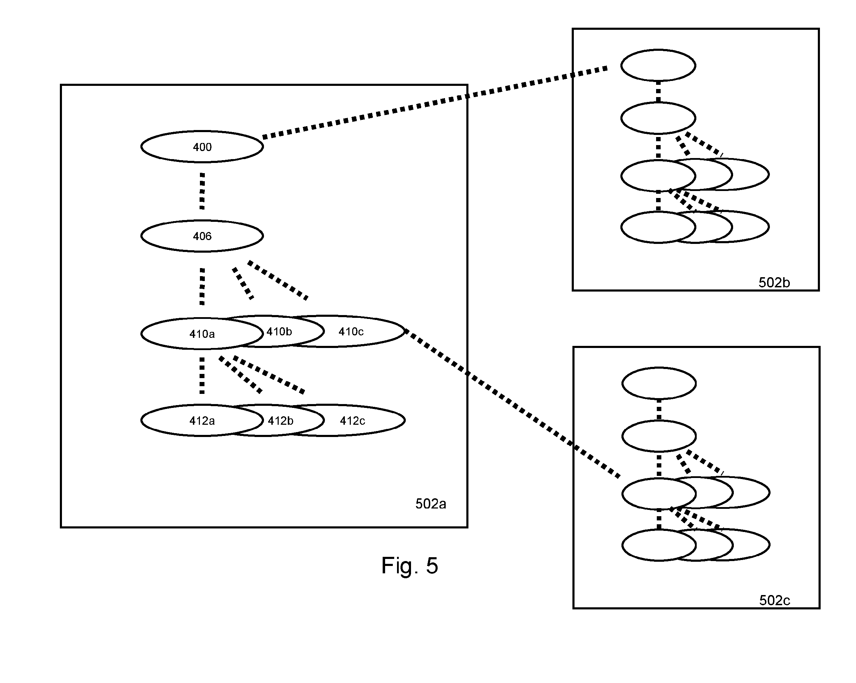

Referring to Fig. 5, it will be seen that an embodiment provides a flexible system of identifying and marking associations between records. There is a hierarchical relationship between two account records, (e.g., where a supervisor account has rights to an account being supervised). The supervised account can, in turn, have associations with other records. With such associations, it can be seen that a series of accounts can be linked together in a tree structure, per tree 502a, 502b and 502c. In a typical tree structure a root node has associations with one or more dependent branches at nodes descending from the root. In tree 502a, account 400 is the supervisor account to account 406. Then account 406 is the supervisor account to accounts 410a-c. Then account 410a is the supervisor account to accounts 412a-c. Other account trees, 502b and 502c, may be linked to one or more accounts in tree 502a. Tree 502a shows a hierarchy where each descending level of accounts in its structure is a dependent account to at least one account in the next higher level. In other embodiments, multiple dependencies can be provided. For example, account 400 may be provided with supervisor rights to account 410c (link not shown in Fig. 5). Also, associations can be provided where a dependent account can have supervisor rights to a "superior" account. For example, account 412c may be provided with supervisor rights to account 406 (link not shown in Fig. 5). Such a wrapping of hierarchies may not be typical, but an embodiment does provide this flexibility.

As an alternative / additional GUI for creating a family tree of accounts, an interface provides facilities to graphically build a family tree by adding new nodes and making connections between nodes, akin to a tree 502a shown in Fig. 5. Once the structure of the nodes of the tree is defined, then an embodiment provides GUIs provide templates similar to record 400 and prompt a user at device 110 to complete the relevant fields.

It will be appreciated that other names for relationships between accounts can be provided (e.g. "primary" and "supervisor" accounts, "first" and "second" accounts, "parent" and "child" accounts, etc.). Using a family as nomenclature guide, a grand parent account may have supervisory controls over one or more parent accounts. And each parent account may have supervisory controls over one or more of its children accounts. There may be cross relationships that are permitted between difference parent accounts to different children accounts. For a given family tree, there may be parents, grand-parents, children, siblings, aunts/uncles and friends at different nodes, where each node represents an account. The term "family" is used herein to represent a collection of linked accounts. The sets of nodes provide a natural descending hierarchy (grandparents at one node connected to parents as a lower node, connected to children at a further lower node, etc.). However, such terms when used are provided as illustrative linking terms and are not meant to be limiting.

With some structure defines for associated accounts, further detail is now provided on exemplary limitations, restrictions and / or conditions that can be set and managed by an embodiment among accounts. Table A, below, shows some categories of limitations, restrictions and conditions for a transaction that a supervisory account can impose on one or more subordinate accounts provided by an embodiment.

**Table A**

| Condition | Exemplary values |
|---|---|
| Location | The device associated with the transaction must be at a certain location (e.g. at home); and / or must not be at a restricted location (e.g. at school). |
| Time | The transaction must be received within a predetermined time period (e.g. before midnight, local time). |
| Device | The device associated with the transaction a specific device (e.g. home computer); and / or must not be from a restricted device (e.g. from a mobile device). |
| Restriction Amount | The transaction cost cannot exceed a predetermined amount (e.g. $100), either for that transaction and / or for cumulative transactions over a predefined period of time. |
| Restriction Vendor | The target vendor/supplier associated with the transaction must not be from a restricted vendor (e.g. Apple); and / or can only be one of a list of vendors (e.g. Disney). |
| Permission | The requesting account must obtain permission from a supervisor account as a positive step to complete the transaction. The permission may be provided through a request sent to from the server to a device associated with the supervisor account. |
| Restriction type | Restriction can be either inclusory or exclusory |
| Related Restriction | Restriction may be conditional on other restrictions |
| 2^{nd} Restriction type | Restriction can be either inclusory or exclusory |
| 2^{nd} Related Restriction | Restriction may be conditional on other restrictions |
| External Condition | A status flag, message or other condition may need to be satisfied (or not satisfied) for this Restriction |
| Restriction Arbitration | The first restriction field supersedes the second restriction field |
| Change Condition | If this condition is present, then restriction limit is changed by an indicated amount |
| .... | .... |

Server 108 manages such restrictions and interfaces to request application of such restrictions and modifications for such restrictions. A user having access rights to an account may access server 108 through network 102 through a device 110. A user interface or GUI may be generated by server 108 which provides forms for fields for updating and imposing conditions on accounts. Once a request form is completed and submitted to server 108 by device 110, server 108 extracts the data relating to the request including: the target account, the requested transaction restriction category and the value for the restriction. Server 108 will then analyze the data and compare same to a set of restriction parameters. For example, the parameters may include data that determines whether or not that account can impose restrictions on other accounts and if so, which other accounts and types of restrictions that can be imposed. The parameters can also include data determining whether or not that the target account can have restrictions imposed on it and if so by what other accounts. If the restrictions or a set of different restrictions as imposed on the target account, then server 108 may generate and send a message to the account at device 110 confirming the change. A second message may also be sent to the account to which the restriction was imposed, advising of the restriction.

Further details are provided on additional features of an embodiment, introduced above. These features provide management, transfer and changes to fields for accounts. The changes are managed by server 108. Data for the changes are provided from a user at a device 110, which access a user input or GUI screen managed by server 108 to allow entry of relevant account data and related change requests, such as entry of fields and values provided in Table A.

One additional feature provides processes and mechanisms management of enrolment for the accounts. A user having an account is allowed to create, manage and maintain his/her own hierarchy of user accounts that are associated with his/her account. Each account holder is provided with a unique identity account number. A user of the primary account would establish a hierarchy of user accounts, such as those shown in Fig. 5. An exemplary hierarchy is where a father establishes his account and establishes an account for his spouse below him and a set of accounts for their children linked to the spouse's account. All accounts have a unique identity. Once the tree of accounts is established, further refinement of the accounts can be provided through other interfaces by server 108.

Another feature provides processes and mechanisms for an account owner to create categories and assign such categories to any set of accounts in the accounts at various nodes in the tree of accounts. For the above family example, the father (or mother) can create a "Pre-teen" category for the account family tree and that category can be assigned it to associated pre-teen account members in the family tree. Thereafter, the category can be associated with one or more filter conditions for transactions that are applied to all members in the category. For example, a filter for Pre-teen accounts can be established and set to limits for purchases, accesses to websites / materials / games / content that has been designated (or tagged) as being appropriate for that Pre-teen category. The category feature is especially useful for online gaming systems (e.g. the Playstation network) which provide downloadable content for an account.

In a business context, a filter can be provided to permit only the purchase / download of business-related applications and may impose spending ceilings for bands of employees. As an example, a corporation managing accounts for its sales staff may introduce a filter that permits its designated sales staff to download only business travel applications. Such categorizations can be applied via settings in a related "apps" store.

Another feature provides processes and mechanisms to grant, distribute and redistribute funds, credits and / or rights from one account to one or more associated accounts. A situation where a re-allocation of rights is provided by an embodiment is illustrated through an example. For a set of business accounts for sales agents, each account may be allocated with a credit amount for downloading applications from an apps store. The credit may be time limited. Upon a certain trigger condition (e.g. an approaching date within a threshold of the expiry date of the credits), a user of an account can grant certain rights / credits to other accounts, based on defined permissions of the granting account and the receiving account(s). For example, if sales account X has a credit of three applications available for download for the current month. If the user of sales account X determines that he does not need any more applications and his colleague sales agent has used her monthly credits for applications, then the user of sales account X can release, transfer and / or assign a portion or all of his credits to other accounts, such as the account for sales agent Y.

As a related feature, a user having an account in a family of accounts can send messages to solicit for credits to from his peer accounts (e.g. siblings or descendants) or his superior accounts. The request may be submitted by from the user's account to server 108, which then identifies the appropriate related accounts and send a message to the related accounts. The request can be sent to peers (e.g. siblings) in the account family, such as descendents and / or superiors. The request can be sent to other unrelated families. Certain acknowledgement messages may be generated and sent by server 108 to device 110 when a user of the account at device 110 initiates a solicitation request. Once replies are provided, server 108 may analyze the responses providing positive replies and authorizations before determining how much and how to transfer credits from the authorizing accounts to the requesting account. A Credit field can be provided for an account to track available credits, which may reflect a residual value in any Restriction Limit fields for the record.

An embodiment may wait until a number of responses are provided (up to a threshold) before determining how to re-allocate any credits from the accounts that provided approvals of such transfers to the requesting account. The amount transferred from each account can be pro-rated, based on the approving account's current credit level (e.g. the transfer is X% of the available credit for account Y) or a simple block transfer (e.g. the transfer is $Z from account Y). As such, an embodiment allows transferring of a value from a credit field in an account to a corresponding credit field in another account upon either receiving a transfer credit request from the other account or acceptance of an offer for the credit from the other account.

Another feature provides processes and mechanisms to change a credit value for an account dynamically. As a refinement to establishing a limit for a transaction request, the limit value can be dynamically set, where the value of a field (e.g. transaction limit) is changed (i.e., increased or decreased) dynamically. The change can be predicated on an update condition associated with the restriction field. The change condition can be an external event / condition detected and reported to server 108 and / or can be an event / condition detected by server 108. For example, consider a parent account that controls a related child's account. The parent account can establish for the child's account a spending limit (which may be represented in the restriction field of the child's account). The parent account can impose an update condition that the limit provided in the restriction field is decreased at the end of a week, if the child does not complete predetermined chores. In operation, at the end of the week, an evaluation can be made as to whether or not the chores have been completed. Depending on the results of the evaluation, the limit can be decreased, increased or not changed. The evaluation can be conducted (manually) by the parent, who makes a determination as to whether the chores were completed sufficiently. Based on the results of the evaluation, the parent can send a status message to server 108 relating to the completion level of the chores. When server 108 receives the message, it can extract the deemed completion level data from the message. Then server 108 can evaluate the completion level data against value(s) in a change condition field for the account. Alternatively, a spending limit for the child's account is retained unless or until a message is provided from the parent account. Alternatively still, server 108 may automatically reduce the spending limit for the child's account unless or until a message is provided from the parent account, providing a so-called "negative option".

Server 108 may provide processes to send a query message to the parent account at an evaluation time to prompt a response from the parent account relating to an evaluation of the completion of the chores. For some change conditions, server 108 can initiate data / status inquiries on the target account to determine if the change condition has been satisfied. For example, if the change condition is that the limit is retained only if no transactions have been made in the last three days for the account, then server 108 may formulate and execute a suitable database inquiry to database 114 to retrieve transactions processed by the target account. If the evaluation of the relevant transaction data indicates that no transactions have been made over the designated time period by the account, then the limit is maintained. If a transaction is detected within the designated time period, then the limit is reduced according to the determined amount. Other inquiries can be made by server 108, where possible. Such inquiries can be made to data retained in database 114 and / or status information relating to the target account.

All parameters for the fields that have dynamic values (with upper and lower limits), change conditions and notification procedures are provided via inputs to a GUI provided to server 108 from the requesting device 110.

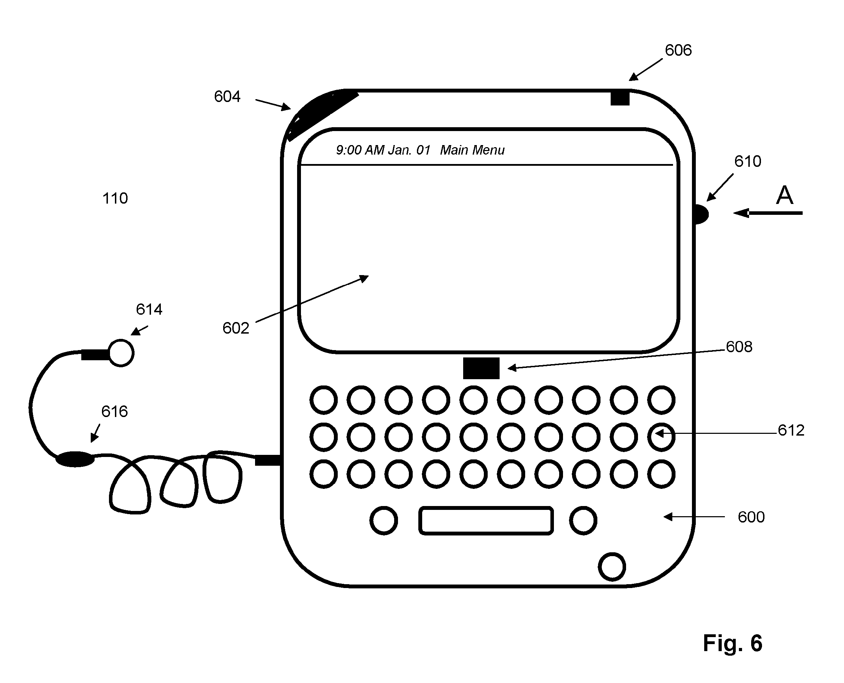

Further detail is now provided on components of device 110 that are related to processes relating to an embodiment. Referring to Fig. 6, device 110 is based on a computing platform having functionality of an enhanced personal digital assistant with cellphone and e-mail features. It is, however, to be understood that electronic device 110 can be based on construction design and functionality of other electronic devices, such as smart telephones, desktop computers, pagers or laptops having telephony equipment. In a present embodiment, electronic device 110 includes a housing 600, an LCD 602, speaker 604, an LED indicator 606, touchpad 608, an ESC ("escape") key 610, keypad 612, a telephone headset comprised of an ear bud 614 and a microphone 616. Touchpad 608 and ESC key 610 can be inwardly depressed as a means to provide additional input to device 110. ESC key 610 may be depressed along the path of arrow "A". A trackball may be provided (not shown).

It will be understood that housing 600 can be made from any suitable material as will occur to those of skill in the art and may be suitably formed to house and hold all components of device 110. Exemplary communication capabilities for device 110 were described earlier. Device 110 also has a processor (not shown), memory (not shown) and application modules stored in its memory to initiate transactions and queries and control requests to server 108 (as described earlier).

The embodiments have been described for a system that provides a server to provide processing of transaction requests for accounts from devices in a network. It will be appreciated that embodiments may implement the features in any communication protocol or system. It will be appreciated that any features of server 108 as described herein may be incorporated into a device or a component of another server in network 102.

It will be appreciated that the embodiments relating to devices, servers and systems may be implemented in a combination of electronic hardware, firmware and software. The firmware and software may be implemented as a series of processes, applications and/or modules that provide the functionalities described herein, when executed on a processor of the related device. The applications, modules, algorithms and processes described herein may be executed in different order(s). The applications, modules, algorithms and processes described herein may be executed in on a collection of devices (e.g., in a distributed computing environment). Data may be stored in volatile and non-volatile devices described herein and may be updated by hardware, firmware and/or software components as described herein. The data and processing thereof described herein may be executed through on a collection of devices (e.g., in a distributed data storage environment). Other network embodiments may use non-client server architectures for management of communications.

It will be appreciated that a system and method in accordance with an embodiment can address a technical problem of how to provide control and management of data items to a plurality of devices within a network. By allowing devices from the plurality of available devices operating within the network to manage, share, change and modify account parameters which are accessed by other devices, an embodiment may enable the specific distribution and control of appropriate transaction requests made from those devices. This control of the devices and /or accounts may provide a reduction in the overall traffic within the network as it can obviate or reduce the need to push (or pull) data items for a transaction that will ultimately, if not for the embodiment, be later reversed. Furthermore, other features regarding the shares and re-allocation of limits and credits for transactions may further provide reduction in traffic within the network as the limits to transactions that are re-allocated among user accounts can ensure that proper resources for a transaction (e.g. spending limits) are effectively pre-filtered and pre-evaluated for approval prior to their submission by a target device.

As used herein, the wording "and / or" is intended to represent an inclusive-or. That is, "X and / or Y" is intended to mean X or Y or both.

In this disclosure, where a threshold or measured value is provided as an approximate value (for example, when the threshold is qualified with the word "about"), a range of values will be understood to be valid for that value. For example, for a threshold stated as an approximate value, a range of about 25% larger and 25% smaller than the stated value may be used. Thresholds, values, measurements and dimensions of features are illustrative of embodiments and are not limiting unless noted. Further, as an example, a "sufficient" match with a given threshold may be a value that is within the provided threshold, having regard to the approximate value applicable to the threshold and the understood range of values (over and under) that may be applied for that threshold.

The present disclosure is defined by the claims appended hereto, with the foregoing description being merely illustrative of embodiments of the present disclosure. Those of ordinary skill may envisage certain modifications to the foregoing embodiments which, although not explicitly discussed herein, do not depart from the scope of the present disclosure, as defined by the appended claims.

## Claims

1. A method for managing transaction restrictions for an account in a family of accounts through a network, said method comprising:
upon receipt of a transaction request associated with said account from a device in said network at a server, analyzing a restriction field associated with said account against parameters associated said transaction request, and
when a transaction price associated with said transaction request exceeds a value in said restriction field, denying completion of said transaction;
when a transaction entity associated with said transaction request is present as a restricted entity in said restriction field, denying completion of said transaction; and
when contents of said restriction field relating to restrictions do not match any of said parameters, allowing completion of said transaction;
and
upon receipt of a change request from said network for said transaction restriction, updating said restriction field to reflect said change request.

2. The method for managing transaction restrictions for an account as claimed in claim 1, further comprising:
when said transaction entity associated with said transaction request is present as an allowed entity in said restriction field, allowing completion of said transaction.

3. The method for managing transaction restrictions for an account as claimed in claim 1 or 2, further comprising:
when completion of said transaction is denied, generating and sending a deny message to said device through said network.

4. The method for managing transaction restrictions for an account as claimed in any preceding claim, further comprising:
when completion of said transaction is allowed, generating and sending an allow message to said device through said network.

5. The method for managing transaction restrictions for an account as claimed in any preceding claim, further comprising:
when completion of said transaction is allowed, updating a transaction status field associated with said account with a parameter of said parameters associated with said transaction.

6. The method for managing transaction restrictions for an account as claimed in any preceding claim, further comprising:
upon receipt of a subsequent transaction request from said network, analyzing said transaction status field against parameters associated said subsequent transaction request to determine whether said subsequent transaction can be completed.

7. The method for managing transaction restrictions for an account as claimed in any preceding claim, further comprising:
when said server receives a restriction update request for a group of accounts from a supervisor account associated with said group of accounts and when said account is in said group of accounts, revising said transaction field with a parameter related to said restriction update request.

8. The method for managing transaction restrictions for an account as claimed in any preceding claim, further comprising:
updating said restriction field with a revised value upon detection of an update condition for said restriction field.

9. The method for managing transaction restrictions for an account as claimed in claim 8, wherein:
said update condition is based on a time event or an occurrence event, said time event and said occurrence event being tracked in a database accessed by said server, wherein optionally
data for said occurrence event is updated by a supervisor account associated with said account.

10. The method for managing transaction restrictions for an account as claimed in any preceding claim, further comprising:
upon receipt of said transaction request,
analyzing a second restriction field associated with said account against parameters associated said transaction request;
arbitrating between values in said restriction field and said second restriction field when there is a conflict to determine a dominant restriction value;
analyzing said dominant restriction value against said transaction request; when said transaction price exceeds a value in said dominant restriction value, denying completion of said transaction; and
when said transaction entity associated with said transaction request is present as said restricted entity in said dominant restriction value, denying completion of said transaction.

11. The method for managing transaction restrictions for an account as claimed in any preceding claim, further comprising:
transferring a value from a credit field in said account to a corresponding credit field in a second account, wherein optionally
said value is transferred upon either receiving a transfer credit request from said second account or acceptance of an offer for said value from said second account.

12. A server for managing transaction restrictions for an account in a family of accounts through a network, said server comprising:
a transaction processing module to
receive a transaction request from a device associated with said account in said network;
analyze a restriction field associated with said account against parameters associated said transaction request;
deny completion of said transaction when
a transaction price associated with said transaction request exceeds a value in said restriction field; or
a transaction entity associated with said transaction request is present as a restricted entity in said restriction field;
and
allow completion of said transaction when contents of said restriction field relating to restrictions do not match any of said parameters;
and
an account management module to
receive a change request from said network for said transaction restriction; and update said restriction field to reflect said change request.

13. The server for managing transaction restrictions for an account as claimed in claim 12, wherein said transaction processing module further:
allows completion of said transaction when said transaction entity associated with said transaction request is present as an allowed entity in said restriction field.

14. The server for managing transaction restrictions for an account as claimed in claim 12 or 13, wherein said transaction processing module further:
generates and sends a deny message to said device through said network when completion of said transaction is denied; and
generates and sends an allow message to said device through said network when completion of said transaction is allowed.

15. The server for managing transaction restrictions for an account as claimed in any of claims 12 to 14, wherein said transaction processing module further:
updates a transaction status field associated with said account with a parameter of said parameters associated with said transaction when completion of said transaction is allowed, and optionally further:
analyzes said transaction status field against parameters associated said subsequent transaction request to determine whether a subsequent transaction can be completed upon receipt of said subsequent transaction request from said network.

## Amended claims

### Amended claims in accordance with Rule 137(2) EPC.

**1.** A method for managing transaction restrictions for an account in a family of accounts through a network, the method comprising:
upon receipt of a transaction request associated with the account from a device in the network at a server, analyzing a restriction field associated with the account against parameters associated the transaction request, and
when a transaction price associated with the transaction request exceeds a value in the restriction field, denying completion of the transaction;
when a transaction entity associated with the transaction request is present as a restricted entity in the restriction field, denying completion of the transaction; and when contents of the restriction field relating to restrictions do not match any of the parameters, allowing completion of the transaction;
upon receipt of a change request from the network for the transaction restriction, updating the restriction field to reflect the change request; and
updating the restriction field with a revised value upon detection of an update condition for the restriction field based on data tracked in a database for an occurrence event provided by a supervisor account associated with the account.

**2.** The method for managing transaction restrictions for an account as claimed in claim 1, wherein:
when the restriction field contain a restriction on a type of device that initiated the transaction and when the device matches the type of device, denying completion of the transaction.

**3.** The method for managing transaction restrictions for an account as claimed in claim 1 or claim 2, wherein:
when the restriction field contains a plurality of restrictions, allowing completion of the transaction when all of the plurality of restrictions for the transaction are satisfied.

**4.** The method for managing transaction restrictions for an account as claimed in any one of claims 1 to 3, further comprising:
collecting at the server a plurality of credit values for accounts from a plurality of devices in the network;
determining an allocation of a portion of the plurality of credit values for the account;
updating a credit field in the account with the allocation; and
utilizing the credit field with the restriction field to evaluate the transaction price associated with the transaction request.

**5.** The method for managing transaction restrictions for an account as claimed in claim 4, further comprising:
deducting the plurality of credit values from the accounts.

**6.** The method for managing transaction restrictions for an account as claimed in any one of claims 1 to 5, further comprising:
receiving a request for a restriction update request for a group of accounts from a supervisor account associated with the group of accounts; and
when it is determined that the account is in the group of accounts, revising the transaction field with a parameter related to the restriction update request.

**7.** The method for managing transaction restrictions for an account as claimed in any one of claims 1 to 6, further comprising:
when the transaction entity associated with the transaction request is present as an allowed entity in the restriction field, allowing completion of the transaction.

**8.** The method for managing transaction restrictions for an account as claimed in any one of claims 1 to 7, further comprising:
when completion of the transaction is denied, generating and sending a deny message to the device through the network; and
when completion of the transaction is allowed, generating and sending an allow message to the device through the network.

**9.** The method for managing transaction restrictions for an account as claimed in any one of claims 1 to 8, further comprising:
when completion of the transaction is allowed, updating a transaction status field associated with the account with a parameter of the parameters associated with the transaction.

**10.** The method for managing transaction restrictions for an account as claimed in any one of claims 1 to 9, further comprising:
upon receipt of a subsequent transaction request from the network, analyzing the transaction status field against parameters associated the subsequent transaction request to determine whether the subsequent transaction can be completed.

**11.** The method for managing transaction restrictions for an account as claimed in any one of claims 1 to 10, further comprising:
upon receipt of the transaction request,
analyzing a second restriction field associated with the account against parameters associated the transaction request;
arbitrating between values in the restriction field and the second restriction field when there is a conflict to determine a dominant restriction value;
analyzing the dominant restriction value against the transaction request; when the transaction price exceeds a value in the dominant restriction value, denying completion of the transaction; and
when the transaction entity associated with the transaction request is present as the restricted entity in the dominant restriction value, denying completion of the transaction.

**12.** A server for managing transaction restrictions for an account in a family of accounts through a network, the server comprising:
a transaction processing module to
receive a transaction request from a device associated with the account in the network;
analyze a restriction field associated with the account against parameters associated the transaction request;
deny completion of the transaction when
a transaction price associated with the transaction request exceeds a value in the restriction field; or
a transaction entity associated with the transaction request is present as a restricted entity in the restriction field;
and
allow completion of the transaction when contents of the restriction field relating to restrictions do not match any of the parameters;
and
an account management module to
receive a change request from the network for the transaction restriction, updating the restriction field to reflect the change request; and
update the restriction field with a revised value upon detection of an update condition for the restriction field based on data tracked in a database accessed by the server for an occurrence event provided by a supervisor account associated with the account.

**13.** The server for managing transaction restrictions for an account as claimed in claim 12, wherein the transaction processing module further:
allows completion of the transaction when the restriction field contains a plurality of restriction and when all of the plurality of restrictions for the transaction is satisfied.

**14.** The server for managing transaction restrictions for an account as claimed in claim 12 or 13, wherein the transaction processing module further:
denies completion of the transaction when the restriction field contain a restriction on a type of device that initiated the transaction and when the device matches the type of device.

**15.** The server for managing transaction restrictions for an account as claimed in any one of claims 12 to 14, wherein the account management module further:
collects from the server a plurality of credit values for accounts from a plurality of devices in the network;
determines an allocation of a portion of the plurality of credit values for the account; updates a credit field in the account with the allocation;
utilizes the credit field with the restriction field to evaluate the transaction price associated with the transaction request; and
deducts the plurality of credit values from the accounts.
